(19) Europäisches Patentamt
European Patent Office
Office européen des brevets

(11) **EP 1 696 207 B1**

(12) **EUROPÄISCHE PATENTSCHRIFT**

(45) Veröffentlichungstag und Bekanntmachung des Hinweises auf die Patenterteilung:
**28.09.2011 Patentblatt 2011/39**

(51) Int Cl.:
**G01C 21/26** (2006.01)    **G07B 15/00** (2011.01)

(21) Anmeldenummer: **06003242.2**

(22) Anmeldetag: **17.02.2006**

(54) **Verfahren und System zur Ermittlung von Positionsdaten eines Objekts**

Method and system for determining an object's position data

Procédé et système destinés à la détermination de données de position d'un objet

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.02.2005 DE 102005008360**

(43) Veröffentlichungstag der Anmeldung:
**30.08.2006 Patentblatt 2006/35**

(73) Patentinhaber: **Vodafone Holding GmbH**
**40213 Düsseldorf (DE)**

(72) Erfinder: **Robl, Christian, Dr.-Ing.**
**94560 Offenberg (DE)**

(74) Vertreter: **Müller, Thomas**
**Patentanwalt**
**Müller & Schubert**
**Innere Wiener Strasse 13**
**81667 München (DE)**

(56) Entgegenhaltungen:
**DE-A1- 4 344 433          DE-A1- 4 402 614**
**US-A1- 2003 016 143     US-B1- 6 230 097**
**US-B1- 6 748 322**

**Beschreibung**

Die vorliegende Erfindung betrifft ein Verfahren und ein System zur Ermittlung von Positionsdaten eines Objektes.

Zur Verfolgung der Position von Objekten, insbesondere von Fahrzeugen, ist es bekannt ein satellitengestütztes Verfahren zur Positionsortung zu verwenden. Insbesondere ist die Verwendung eines Global Positioning Systems (GPS) bekannt, bei dem in oder an dem Fahrzeug ein GPS-Empfänger vorgesehen ist.

Die so erhaltenen Positionsdaten, die bei einem GPS-System auch als Fix bezeichnet werden, können zu unterschiedlichen Zwecken verwendet werden. So ist es möglich diese Positionsdaten einem Navigationssystem zuzuführen, diese als Eingangsgröße für ein Gebührensystem für die Ermittlung einer Streckennutzungsgebühr (Mautsystem) oder einer Überwachung der Befahrung eines Gebietes aus demoskopischen Gründen zu verwenden.

US 6 230 097 B1 beschreibt ein Verfahren und ein System zur akkuraten Fahrzeugnavigation. Hierbei handelt es sich somit um ein so genanntes Fahrerassistenzsystem, bei dem in bestimmten Situationen von dem Fahrzeug Funktionen übernommen werden oder Warnungen ausgegeben werden. Die hierfür erforderlichen Positionskoordinaten werden über ein satellitengestütztes System erfasst. Zur Korrektur von Positionsbestimmungssignalen wird hierbei beispielsweise DGPS oder WAAS verwendet, durch die Korrekturdaten erzeugt werden, die dann mit dem empfangenen LD-Signal verarbeitet werden und so die aktuelle Position des Fahrzeuges berechnet kann. Weiterhin ist in der DE 44 02 614 A1 ein Verfahren zur Ermittlung von Gebühren für die Nutzung von Verkehrswegen durch Fahrzeuge beschrieben, wobei die geographische Position eines Fahrzeugs laufend mit Hilfe von Funkortung, insbesondere mit dem GPS-System, ermittelt und mit geographischen Positionen von virtuellen Erhebungsstellen verglichen wird. Die virtuellen Erhebungsstellen werden hierbei von Erfassungsabschnitten gebildet, die sich über vorgegebene Längen in Richtung des jeweiligen Verkehrsweges erstrecken. US 6,748,322 B1 beschreibt ein System zur Überwachung und Lokalisierung eines Fahrzeuges unter Verwendung eines GPS-Systems und Vergleich der Positionsfixe und der Geschwindigkeit gegenüber einer computerisierten Karte, in der Grenzen für die Geschwindigkeit und das Territorium vorgegeben sind. US 2003/0016143 A1 beschreibt ein System zur Vermeidung von Fahrzeugkollisionen an Kreuzungen. In diesem System wird der Fahrer eines Fahrzeuges gewarnt, wenn der Fahrer beim Annähern an eine Kreuzung, insbesondere an eine Kreuzung, an der die Ampel auf gelb oder rot umgeschaltet hat, nicht abbremst. Die Geschwindigkeit des Fahrzeuges wird über einen Geschwindigkeitssensor-Komparator und die Richtung des Fahrzeuges beispielsweise über einen GPS-Empfänger bestimmt. Schließlich beschreibt die DE 43 44 433 A1 beschreibt ein Erfassungssystem für Autobahngebühren mittels elektronischer Vignette. Hierbei werden über einen GPS-Empfänger laufend die Orts-Koordinaten des Fahrzeuges ermittelt und mit fest gespeicherten Einfahrt- und Ausfahrt-Koordinaten von Autobahnteilabschnitten verglichen. Stimmen diese überein, so werden die Koordinatendaten an eine zentrale Abrechnungsstelle übertragen.

Bei diesen Anwendungen ist es notwendig eine Ruheposition eines Fahrzeuges zuverlässig erkennen zu können, um beispielsweise bei einem Mautsystem eine mehrfache Gebührenerhebung bei Stillstand des Fahrzeuges zu vermeiden. Auch bei einem Navigationssystem ist die zuverlässige Erkennung der Ruheposition von besonderer Bedeutung, da die unterschiedlichen Ortungssignale in diesem Zustand abgeglichen werden. Um den Ruhezustand zu erkennen, werden Gyrosensoren, Beschleunigungssensoren oder Bildverarbeitungssensoren verwendet.

In der DE 100 10 607 A1 ist beispielsweise ein Navigationssystem beschrieben, das eine Empfangs- und Auswerteeinheit für Satellitensignale zur Positionsbestimmung aufweist. Für die Unterscheidung zwischen einem Bewegungszustand und einem Ruhezustand des Fahrzeuges wird ein, in dem Fahrzeug angeordneter Sensor verwendet. Dieser Sensor kann ein Richtungssensor, zum Beispiel in Form eines Drehratensensors, sein. Bei diesem Navigationssystem wird die Unterscheidung zwischen einem Ruhezustand und einem Bewegungszustand durchgeführt, indem das Rauschen des Sensorsignals als Unterscheidungskriterium verwendet wird.

Die Systeme des Standes der Technik weisen die Nachteile auf, dass zusätzlich zu dem GPS-System eine Sensor-Hardware bereitgestellt werden muss, der Sensor in das System integriert werden muss und dessen Daten gesondert verarbeitet werden müssen. Es entsteht ein zusätzlicher Aufwand aufgrund der durchzuführenden Sensorfusion, die durch Verwendung eines Kalman-Filters realisiert werden kann.

Der vorliegenden Erfindung liegt somit die Aufgabe zugrunde ein Verfahren und ein System zu schaffen, bei dem die Integrität der Erfassungswerte eines satellitengestützten Ortungssystems für bestimmte Anwendungen, wie beispielsweise Navigationssysteme und/oder Mautsysteme, erhöht werden kann.

Der Erfindung liegt die Erkenntnis zugrunde, dass diese Aufgabe gelöst werden kann, indem Kriterien zur Erhöhung der Integrität verwendet werden, die von dem satellitengestützten System selber bereit gestellt werden.

Die Aufgabe wird somit gelöst durch ein Verfahren gemäß den Merkmalen des Anspruchs 1 und ein System mit den Merkmalen des Anspruchs 15. Weiterbildungen der Erfindung und bevorzugte Ausführungsformen sind Gegenstand der Unteransprüche.

Vorteile und Merkmale, die bezüglich des erfindungsgemäßen Verfahrens beschrieben werden gelten -soweit anwendbar- auch für das erfindungsgemäße System und umgekehrt.

Gemäß einem ersten Aspekt der Erfindung betrifft diese ein Verfahren zur Ermittlung von Positionsdaten eines Objekts, bei dem Signale zur Positionsermittlung von einem Positionsermittlungs-System an einen, dem Objekt zugeordneten, Empfänger übermittelt werden, wo aus den erfassten Signalen Positionsangaben ermittelt werden, wobei die an den Empfänger übermittelten Positionsangaben einer Prüfung unterzogen werden, wobei zumindest ein Attribut des Empfängers als Prüfungskriterium verwendet wird und der Wert des mindestens einen Attributes mit mindestens einem Grenzwert verglichen wird. Das Verfahren ist dadurch gekennzeichnet, dass mindestens ein Attribut einen aus mindestens einer zeitlich zuvor erfassten Positionsangabe zu einer aktuellen Positionsangabe abgeleiteten Abstand und/oder Winkel darstellt und dass der Grenzwert für den Abstand und /oder den Winkel in Abhängigkeit der Geschwindigkeit des Empfängers bestimmt wird.

Ein Objekt im Sinne dieser Erfindung ist insbesondere ein Fahrzeug, vorzugsweise ein Kraftfahrzeug. Als Attribute des Empfängers werden im Sinne der Erfindung solche Angaben bezeichnet, die außer der reinen Positionsangabe in Form von Koordinaten aus den von dem Positionsermittlungs-System an den Empfänger übertragen Signalen zur Positionsermittlung bestimmt werden können oder aus den ermittelten Positionsangaben abgeleitet werden. Die aus den Signalen zur Positionsermittlung ermittelten Positionsangaben werden im Folgenden auch als erfasste beziehungsweise ermittelte Positionsangaben bezeichnet. Zu jeder Positionsangabe liegt der Wert der Attribute vor oder kann abgeleitet werden. Als Attribute können somit beispielsweise die Geschwindigkeit des Empfängers (speed) und/oder der Winkel des Empfängers (course) verwendet werden. Ein weiteres Attribut kann beispielsweise der räumliche Abstand zwischen erfassten Positionen sein, die im Folgenden als Fixes bezeichnet werden. Schließlich können als weitere Attribute weitere Richtungsangaben des Empfängers, die abgeleitete Größen darstellen, verwendet werden. Insbesondere können der Sollkurs, die Bewegungsrichtung und/oder der Winkel zwischen den Bewegungsrichtungen des Empfängers in zwei Positionen des Empfängers Attribute sein.

Durch den Vergleich des Wertes eines Attributs mit mindestens einem Grenzwert, kann das Erfüllen einer vorgebbaren Bedingung überprüft werden. Für diesen Vergleich sind keine Werte erforderlich, die von weiteren Sensoren erfasst werden müssen. Vielmehr werden für den Vergleich Attribute verwendet, die aus den Signalen des Positionsermittlungssystems an dem Empfänger ermittelt werden. Das erfindungsgemäße Verfahren bietet somit ein integrales System, bei dem insbesondere eine Sensorfusion nicht notwendig ist, wodurch das Verfahren gegenüber dem Stand der Technik wesentlich vereinfacht ist. Zudem können die Attribute des Empfängers stets zuverlässig einer Positionsangabe zugeordnet werden, so dass eine separate Zuweisung entfallen kann und die Überprüfung dennoch den tatsächlich vorliegenden Gegebenheiten Rechnung trägt.

Zudem hat sich gezeigt, dass bei Verwendung von Attributen des Empfängers nicht nur zwischen einem Bewegungszustand und einem Ruhezustand unterschieden werden kann, das heißt eine reine Stillstandserkennung, durchgeführt werden kann, sondern zudem die Genauigkeit der Stillstandserkennung und die Integrität der Positionsdaten erhöht werden kann, da eine Reihe weiterer zusätzlicher Umstände berücksichtigt werden können. So können beispielsweise die Abschirmung eines GPS-Empfängers beziehungsweise einer GPS-Antenne, die bei einer Tunnelfahrt auftreten kann, ein sehr langsames Bewegen des Objektes, sowie das typische GPS-Rauschen beim Stillstand eines Objektes und Ausreißer adressiert werden.

Gemäß einer bevorzugten Ausführungsform werden die Positionsangaben in Abhängigkeit des Überprüfungsergebnisses gefiltert. Dies bedeutet, dass nur die Positionsangaben, die die durch den Grenzwert oder andere Prüfungskriterien festgelegten Bedingungen erfüllen, als zulässig, gültig und/oder verwendbar erkannt werden, während die Positionsangaben, die zu einem negativen Prüfergebnis führen, gegebenenfalls verworfen werden. Die als zulässig, gültig und/oder verwendbar erkannten Positionsangaben können alleine oder mit zusätzlichen Informationen für eine weitere Verwendung zur Verfügung gestellt werden. Diese weitere Verwendung kann ein nachfolgender Überprüfungsschritt oder aber eine Verarbeitung in einem nachgeschalteten Verfahren, wie einem Navigationssystem oder einem Mauterhebungssystem, sein. Durch die Filterung wird die Integrität der den Filter passierenden Positionsangaben gewährleistet und dadurch das Ergebnis eines nachgeschalteten Systems, für das die Positionsangaben als Eingangsgrößen dienen, verbessert.

Als zulässig wird eine Positionsangabe erachtet, wenn diese alle Erfordernisse, die vorgegeben sind erfüllt. Insbesondere sind solche Positionsangaben gültig und verwendbar. Eine gültige Positionsangabe kann zumindest dazu verwendet werden die Erfassung einer Position zu registrieren. Als gültig gilt eine Positionsangabe insbesondere dann, wenn diese eine gewisse Qualität aufweist und zudem einen vorgebbaren Maximalabstand zu einer zuvor erfassten Positionsangabe nicht überschreitet. Als verwendbar wird eine Positionsangabe bezeichnet, wenn diese ihren Eigenschaften nach dazu geeignet ist als Eingangsgröße für weitere Berechnungen des Verfahrens oder eines nachgeschalteten Systems zu dienen.

Vorzugsweise werden in dem Überprüfungsschritt die Werte von mindestens zwei Attributen mit Grenzwerten verglichen. Auch in diesem Fall werden die Werte aufgrund des Vergleichsergebnisses gefiltert. Die Vergleiche der mindestens zwei Werte können simultan oder nacheinander erfolgen.

Der Vorteil des Vergleiches von mehr als einem Wert mit einem Grenzwert liegt darin, dass hierdurch unterschiedlichen Situationen Rechnung getragen werden kann. Insbesondere kann auch der Grenzwert eines zweiten Vergleichsschrittes unter Berücksichtigung des Ergebnisses des ersten Vergleichs festgelegt werden.

Weiterhin kann auch die Zugehörigkeit des Wertes des oder der Attribute zu einem Bereich überprüft werden, der weder bei Null beginnt noch im Unendlichen endet. Hierzu wird der Wert mit zwei Grenzwerten verglichen, wobei einer einen Maximalwert und ein weiterer einen Minimalwert darstellt. Ein solcher Bereich kann aufgrund von weiteren Kriterien festgelegt werden. Beispielsweise kann ein Gültigkeitsbereich für den Abstand, das heißt die räumliche Entfernung, zweier Fixes zueinander für eine gegebene Geschwindigkeit des Objektes angegebene werden. Hierdurch können durch den Minimalwert insbesondere das Rauschen bei Stillstand und durch den Maximalwert so genannte Ausreißer erkannt und gegebenenfalls eliminiert, das heißt ausgefiltert werden.

Es ist erfindungsgemäß auch möglich, dass der Grenzwert für ein Attribut in Abhängigkeit mindestens eines weiteren Attributes bestimmt wird. So wird erfindungsgemäß der Schwellwert für einen Abstand zwischen Fixes oder für einen Winkel zu der Fahrtrichtung in Abhängigkeit der Geschwindigkeit des Empfängers festgelegt. Bei höherer Geschwindigkeit wird beispielsweise zwischen zwei nacheinander empfangenen Fixes ein größerer Abstand bestehen als bei niedrigen Geschwindigkeiten. Die Berücksichtigung der Geschwindigkeit oder eines anderen Attributes bei der Festlegung des Grenzwertes, bringt den Vorteil mit sich, dass die Angaben den tatsächlichen Bedingungen angepasst sind und so die Genauigkeit der Ergebnisse und deren Repräsentativität gesteigert werden.

Der Wert mindestens eines Attributs wird in einer Ausführungsform aus zeitlich zuvor erfassten Positionsangaben ermittelt. Hierbei kann vorzugsweise die zuvor erfasste Positionsangabe mir der aktuellen Positionsangabe verarbeitet werden. So kann beispielsweise die Fahrrichtung beziehungsweise die Bewegungsrichtung oder der Abstand aus den Positionsangaben ermittelt werden. Die zeitlich zuvor erfassten Positionsangaben und Attribute des Empfängers in dieser Position können in einem Speicher abgelegt sein, um für die Verarbeitung zur Verfügung zu stehen.

In der Regel werden die Werte eines Attributes eines aktuellen Fixes mit den vorgegebenen Grenzwerten verglichen. Es ist aber auch möglich zumindest einen Wert eines Attributes eines zeitlich zuvor erfassten Fixes mit einem Grenzwert zu vergleichen. So kann beispielsweise die Geschwindigkeit eines zuvor erfassten Fixes mit einem Grenzwert, insbesondere einem Minimalwert verglichen werden. Hieraus ergibt sich, dass sich das Fahrzeug in der letzten erfassten Position bewegt hat. Diese Information ist für die Beurteilung ob ein Fahrzeug beispielsweise einen Tunnel befahren hat von Bedeutung. In diesem Fall wird nämlich der Abstand zwischen zwei zeitlich aufeinander folgenden Fixes sehr groß sein. War die Geschwindigkeit bei dem ersten Fix gleich Null, so ist in der Regel in diesem Fall von einem fehlerhaften Wert, einem so genannten Ausreißer auszugehen. Hat sich das Fahrzeug allerdings bewegt, so kann von einer Tunnelfahrt ausgegangen werden.

Zusätzlich zu dem mindestens einem Attribut des Empfängers wird mindestens eine Angabe bezüglich der Satellitenübertragung, insbesondere eine Verschlechterung der Genauigkeit (dilution of precision DOP), für die Prüfung verwendet. Besonders bevorzugt wird die HDOP (horizontal dilution of precision) betrachtet. Die Satellitenübertragung kann durch eine ungünstige Satellitenkonstellation, Reflexionen von Satellitensignalen, der Abschirmung eines oder mehrerer Satelliten gegenüber dem Empfänger gestört sein. Diese Störungen können teilweise durch Hindernisse, wie Bauwerke oder auch Umwelteinflüsse, wie beispielsweise nasses Laub, hervorgerufen werden.

Mit dem erfindungsgemäßen Verfahren wird insbesondere ermittelt, ob die erfasste Positionsangabe eine gültige Positionsangabe darstellt. Ob der aufgrund der Signale von dem Positionsermittlungssystem an dem Empfänger ermittelte Fix eine gültige Angabe darstellt, kann bei dem erfindungsgemäßen Verfahren unter Berücksichtigung einer Anzahl von Einflüssen und Bedingungen ermittelt werden. Insbesondere wird die Satellitenübertragung berücksichtigt und weiterhin ein maximaler Abstand zwischen aufeinander folgenden Fixes gefordert. Hierdurch können Ausreißer eliminiert werden.

Weiterhin kann in der Prüfung kontrolliert werden, ob die Positionsangabe verwendbar ist. Hierbei können zwei Aspekte berücksichtig werden. Bei dem ersten Aspekt wird überprüft, ob eine zuvor erfasste Positionsangabe mit einer aktuellen Positionsangabe überschrieben werden kann. Das Ergebnis dieser Entscheidung kann als Signal an ein dem Empfänger nachgeschaltetes System beispielsweise ein Gebührenermittlungssystem weitergeleitet werden. Für diese Entscheidung wird berücksichtigt, ob der Fix einen gültigen Fix darstellt, das heißt eine gewisse Qualität aufweist und einen Maximalabstand zu einem vorhergehenden Fix nicht überschreitet. Weiterhin wird bei dieser Prüfung auch berücksichtigt, dass sich das Fahrzeug gegebenenfalls bei einer sehr geringen Geschwindigkeit bewegen kann und bei GPS-Signalen, aufgrund von Rauschen, Fixes ohne Bewegung des Empfängers leicht voneinander abweichen. Schließlich kann auch eine zeitweilige Abschirmung beziehungsweise Abschattung des Empfängers berücksichtigt werden. Durch diese Prüfung kann sichergestellt werden, dass bei einem Fix, der zwar einen gültigen Fix darstellt, insbesondere kein Ausreißer ist, aber den tatsächlichen Zustand des Empfängers nicht wiedergibt, nur die Angabe, dass es ein gültiger Fix vorliegt, weitergegeben wird, die neue Positionsangabe die alte Positionsangabe aber nicht ersetzt. Hierzu kann entweder nur die Angabe, dass ein gültiger Fix vorliegt aber keine Positionsangaben an nachgeschaltete Systeme übertragen werden oder das nachgeschaltete System ist so ausgelegt, dass dieses die Positionsdaten bei Empfang eines entsprechenden Signals nicht überschreibt.

Als weiterer Aspekt der Verwendbarkeit der Positionsdaten kann zusätzlich oder alternativ kontrolliert werden, ob die erfassten Positionsangaben für die Ermittlung weiterer Werte von Attributen verwendet werden können. Hierdurch kann bereits im Vorfeld sichergestellt werden, dass Werte, die nicht repräsentativ sind, nicht als Grundlage für die Berechnung verwendet werden. Hierdurch wird das Ergebnis der weiteren Verarbeitung verbessert. Auch für nachgeschaltete Systeme, wie Mautsysteme kann diese Information von Bedeutung sein, damit auch in diesen nur repräsentative Werte als Eingangsgrößen verwendet werden. Besonders bevorzugt betrifft diese Prüfung richtungsabhängige Attribute. Insbesondere wird überprüft, ob eine neue Bewegungsrichtung des Empfängers berechnet werden kann und ob der Winkel des Empfängers gültig ist. Im Stillstand des Fahrzeuges oder bei zu geringem Abstand zwischen zwei Positionen ist beispielsweise eine Berechnung der Bewegungsrichtung des Empfängers nicht möglich beziehungsweise würden zu falschen Ergebnissen führen. Dem kann durch die beschriebene Überprüfung vorgebeugt werden.

Gemäß einem weiteren Aspekt betrifft die Erfindung ein System zur Ermittlung von Positionsdaten eines Objekts, wobei das System zumindest einen Empfänger zum Empfang von Signalen zur Positionsermittlung von einem satellitenbasierten Positionsermittlungs-System und zur Ermittlung von Positionsangaben aufweist. Das System zeichnet sich dadurch aus, dass dieses eine Erkennungseinheit zum Erkennen des Stillstandes eines Objekts aufweist, wobei die Erkennungseinheit dem Empfänger zugeordnet ist und die Erkennungseinheit eine Vergleichseinheit umfasst, wobei die Vergleichseinheit zur Bestimmung der Zugehörigkeit von Positionsangaben zu einem vorgegebenen Bereich dient, wobei der Bereich einen Zulässigkeitsbereich darstellt, dessen Grenzwerte für den Abstand zwischen Positionsangaben und/oder für einen Winkel zu der Fahrtrichtung in Abhängigkeit der Geschwindigkeit des Empfängers festgelegt werden. Der Empfänger, der insbesondere einen GPS-Receiver darstellt, kann mit der Erkennungseinheit in einem Steuergerät eines Gebührenerfassungssystems, insbesondere einer so genannten On-Board-Unit (OBU) zusammengefasst sein. Es ist aber auch möglich die OBU und den Empfänger als separate Geräte auszubilden.

Die Stillstandserkennungseinheit kann in dem Empfänger enthalten, das heißt in diesen integriert sein und insbesondere ein Programm darstellt. Somit wird eine software-basierte Stillstandserkennung geschaffen. Die Stillstandserkennungseinheit kann aber auch in einem Steuergerät eines Mautsystems, insbesondere in einer so genannten On-Board-Unit (OBU) enthalten sein.

Die Erkennungseinheit umfasst erfindungsgemäß eine Vergleichseinheit, wobei die Vergleichseinheit zur Bestimmung der Zugehörigkeit von Positionsangaben zu einem vorgegebenen Bereich dient.

Das erfindungsgemäße System weist vorzugsweise eine Schnittstelle, insbesondere eine Luftschnittstelle, zu einem Mauterhebungssystem auf. Über diese Schnittstelle können Positionskoordinaten sowie Signale betreffend die Relevanz eines Fixes übertragen werden. Die Signale betreffend die Relevanz des Fixes können beispielsweise die Angabe über dessen Gültigkeit und Verwendbarkeit für nachfolgende Berechnungen umfassen.

Die übermittelten Daten können in dem Mauterhebungssystem als Eingangsgrößen verwendet werden und liefern insbesondere Positionskoordinaten mit denen eine zuverlässige Erkennung von GeoObjekten, wie beispielsweise Virtual Gantries, erzielt werden kann. Solche GeoObjekte sind in der Regel durch eine Fläche in einem Koordinatensystem definiert und können beispielsweise im Bereich von Positionskoordinaten hinterlegt sein, bei denen eine Auffahrt auf einen gebührenpflichtigen Streckenabschnitt liegt.

Die Erfindung wird im Folgenden anhand der beiliegenden Figuren erneut erläutert. Es zeigen:

Figur 1: eine schematische Darstellung von GPS-Fixes in einem KoordinatenSystem, die nach dem Stand der Technik erfasst wurden;

Figur 2: eine schematische Darstellung von GPS-Fixes in einem KoordinatenSystem, die nach einer Ausführungsform der vorliegenden Erfindung erfasst wurden;

Figur 3: eine schematische Darstellung eines Gültigkeitsbereiches für Fixes für eine erste Geschwindigkeit des Empfängers;

Figur 4: eine schematische Darstellung eines Gültigkeitsbereiches für Fixes für eine zweite Geschwindigkeit des Empfängers; und

Figur 5: eine schematische Darstellung einer Ausführungsform des erfindungsgemäßen Systems.

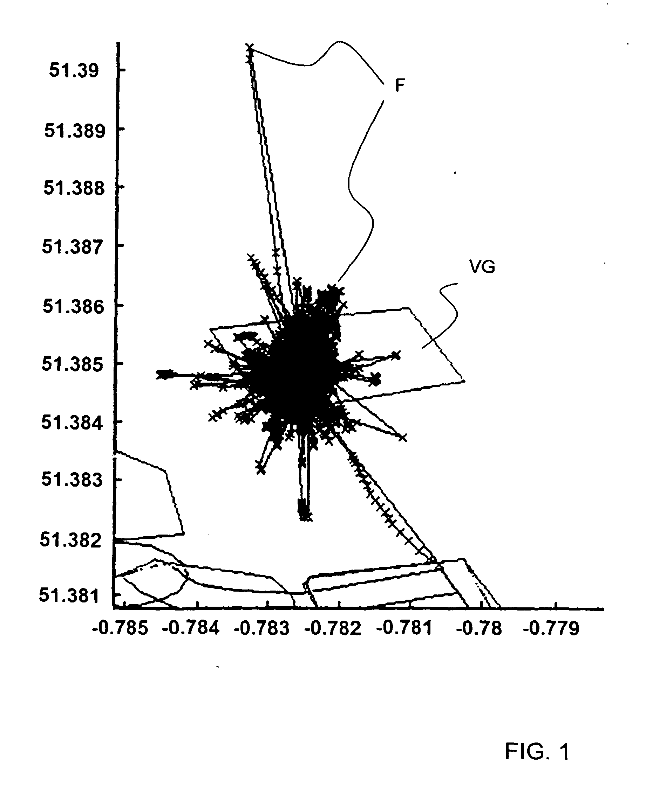

In Figur 1 ist ein Koordinatensystem für Positionskoordinaten dargestellt, die aufgrund von Signalen von einem GPS-System 7 an einem GPS-Empfänger 9 ermittelt werden. In diesem Koordinatensystem ist eine Fläche VG definiert, die ein so genanntes Virtual Gantry darstellt. Diese Fläche VG kann einem geographischen Bereich entsprechen und beispielsweise die Zufahrt in einen gebührenpflichtigen Bereich, wie eine Stadt oder auf eine Autobahn, repräsentieren. Werden GPS-Fixes F mit einem System nach dem Stand der Technik, das heißt insbesondere ohne Verwendung des erfindungsgemäßen Verfahrens erfasst, so erhält man beim Stillstand eines Fahrzeuges für drei Tage das in Figur 1 dargestellte Ergebnis.

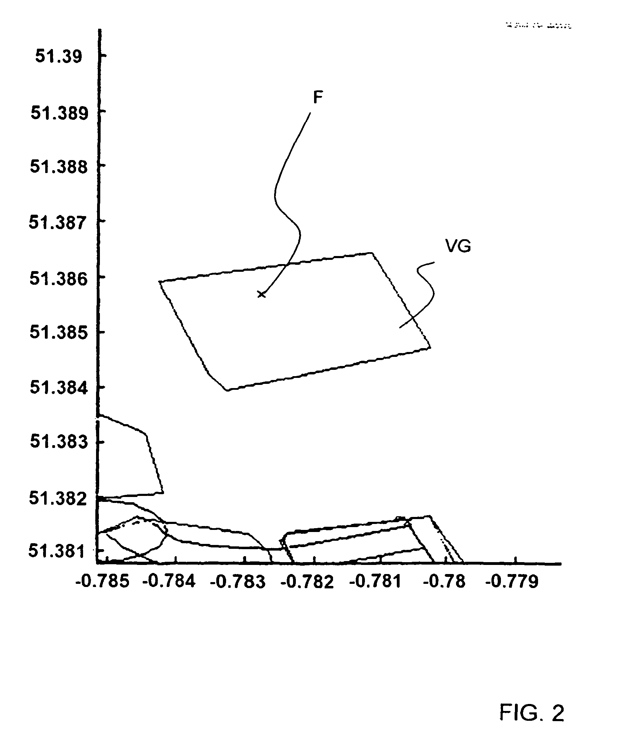

In Figur 2 hingegen ist das Ergebnis gezeigt, das mit dem erfindungsgemäßen Verfahren erzielt werden kann. Wie sich aus Figur 2 entnehmen lässt, spiegelt das Ergebnis des erfindungsgemäßen Verfahrens die tatsächliche Bedingung, nämlich das stationäre Verhalten des Empfängers für drei Tage, wesentlich präziser wieder. Wird somit die Positionserfassung für ein Mauterhebungssystem verwendet, so erfolgt bei dem erfindungsgemäßen Verfahren zutreffend eine einmalige Gebührenerhebung. Bei einem Verfahren nach dem Stand der Technik würde das Mautsystem hingegen fälschlicher Weise mehrfach eine Gebühr erheben, was auch als Mehrfachbemautung oder Static Charging bezeichnet wird.

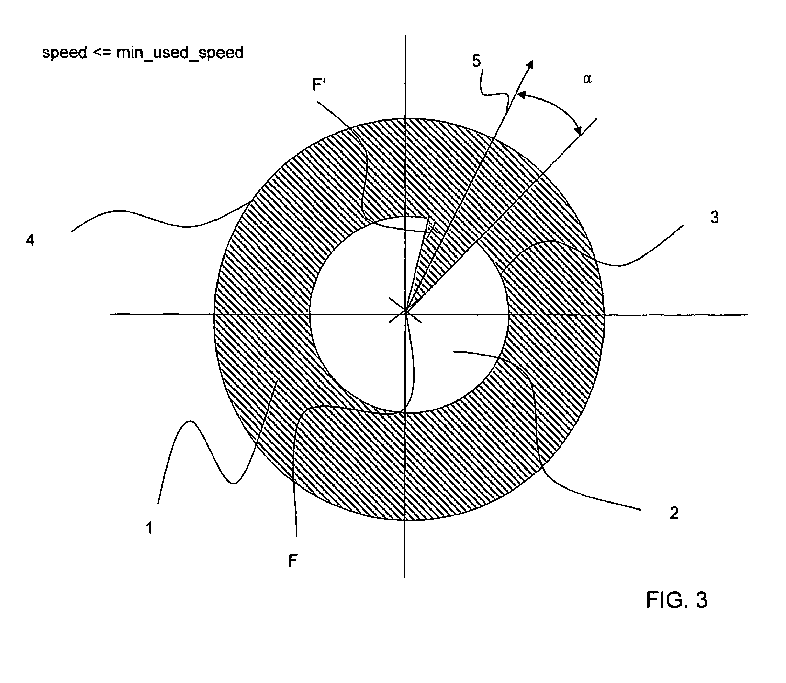

In Figur 3 ist schematisch ein Zulässigkeitsbereich 1 für einen Fix F' dargestellt, der zeitlich nach einem Fix F erhalten wird. Der dargestellte Zulässigkeitsbereich 1 trifft für geringe Geschwindigkeiten bei dem Fix F', insbesondere für Geschwindigkeiten unterhalb eines Geschwindigkeitsgrenzwertes zu. Wie sich aus der Figur 3 entnehmen lässt, kann bei diesen Geschwindigkeiten ein Fix F', der in unmittelbarer Nähe 2 des zuvor aufgenommenen Fixes F' liegt, gültig sein. Dies stellt den so genannten Kriechfall dar, in dem sich ein Fahrzeug mit sehr geringer Geschwindigkeit bewegt. Um aber dennoch Fixes ausschließen zu können, die aufgrund von Störungen oder dem für GPS-Systeme typischen Rauschen, erfasst würden, ist in unmittelbarer Nähe des ersten Fixes F der Zulässigkeitsbereich 1 auf einen Winkelbereich $2\alpha$ beschränkt, der um die Fahrtrichtung 5, des Fahrzeuges bei dem ersten Fix F liegt. Erst ab einem unteren Grenzwert 3, der den minimalen Fixabstand beschreibt, kann der nächste Fix F' in einer beliebigen Richtung um den ersten Fix F liegen. Aufgrund der Geschwindigkeit, die für den Zulässigkeitsbereich 1 zugrunde gelegt wird, kann auch ein maximaler Abstand 4 definiert werden. Ist der Abstand zwischen Fix F und Fix F' größer als der Maximalwert 4, so ist der Fix F' ungültig.

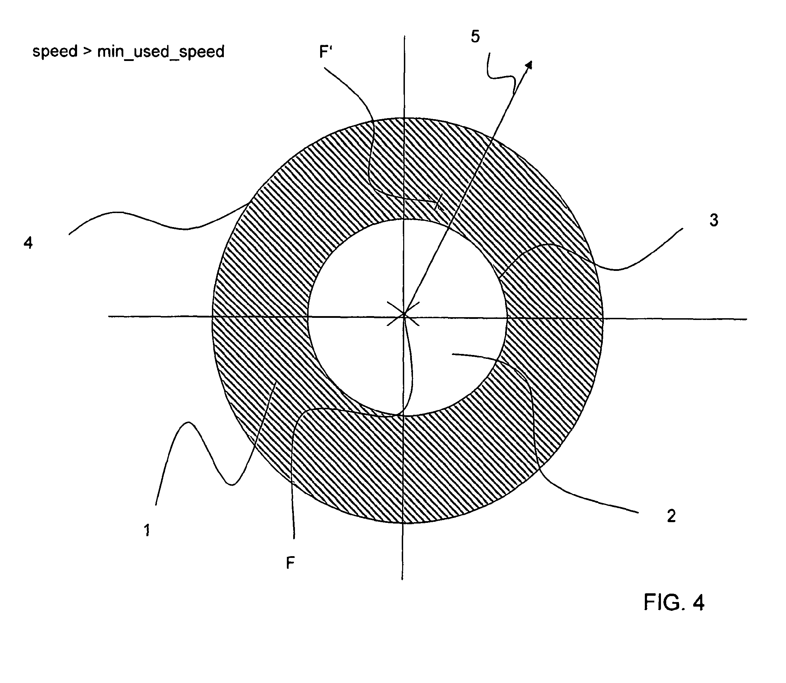

In der Figur 4 ist ein entsprechender Gültigkeitsbereich 1 für einen Fix F' dargestellt, der zeitlich nach dem Fix F aufgenommen wird und bei dem eine über der Mindestgeschwindigkeit liegende Geschwindigkeit vorliegt. Bei dieser Geschwindigkeit ist ein Kriechverhalten des Fahrzeuges ausgeschlossen, so dass der Winkelbereich um die Fahrtrichtung 5 in unmittelbare Nähe des Fixes F nicht zu dem Zulässigkeitsbereich 1 zählt.

Es ist allerdings auch möglich, dass ein Fix F', der bei einer Geschwindigkeit unterhalb der Mindestgeschwindigkeit oder bei darüber liegender Geschwindigkeit, erfasst wird, als zulässig erkannt wird, obwohl er außerhalb des in den Figuren 3 und 4 gezeigten Zulässigkeitsbereiches 1 liegt, insbesondere einen größeren Abstand, als den Maximalabstand 4 zu dem Fix F aufweist. Dies ist der Fall, wenn die Geschwindigkeit des zuvor aufgenommenen Fixes F größer als die Mindestgeschwindigkeit ist. Hierdurch kann eine zeitweilige Abschirmung des Empfängers, was insbesondere bei einer Tunnelfahrt der Fall ist, berücksichtigt werden. Entspricht der aufgenommene Fix F dem letzten vor dem Eintritt in den Tunnel aufgenommenen Fix, so wird der nächste Fix F', der erfasst wird, der erste Fix sein, der nach dem Verlassen des Tunnels verfügbar ist. Dieser Fix F' wird aber in der Regel außerhalb des für normales Fahren definierten Zulässigkeitsbereiches 1 liegen. Da die Geschwindigkeit des Fixes F bei der Einfahrt in den Tunnel über der Mindestgeschwindigkeit liegt, kann diese Situation erkannt werden und der außerhalb des Zulässigkeitsbereiches 1 liegende Fix als zulässig oder zumindest als gültig erkannt werden.

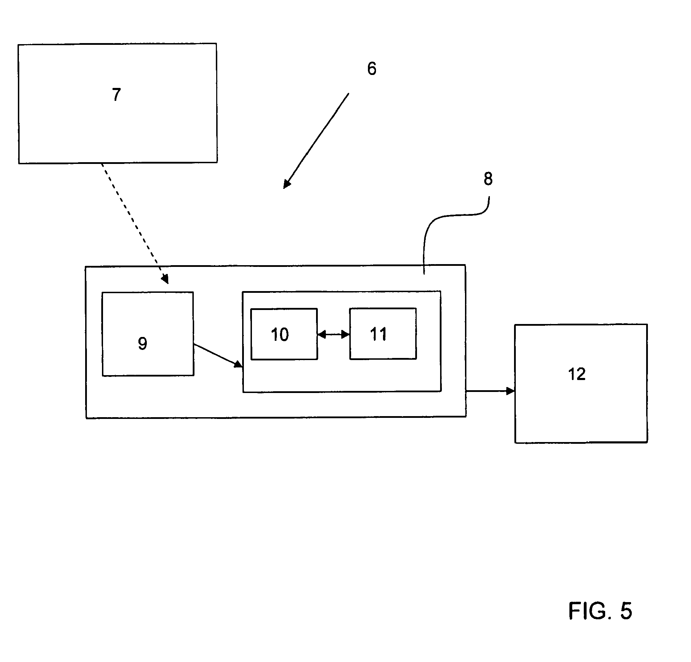

Die Überprüfung der Zugehörigkeit eines Fixes F' zu einem Zulässigkeitsbereich 1 und die Berücksichtigung der Geschwindigkeit sowie weiterer Faktoren kann in einem in Figur 5 schematisch dargestellten System erfolgen. Das System 6 umfasst hierbei ein Positionsermittlungssystem 7, das in der Regel eine Anzahl von Satelliten umfasst. Diese stehen zumindest teilweise mit einer On-Board-Unit (OBU) 8 in Kontakt. Von dem Positionsermittlungssystem 7, insbesondere von dessen Satelliten, werden Signale zur Positionsermittlung ausgegeben, die von der Empfangseinheit, das heißt einem GPS-Empfänger 9, erfasst werden können. Die OBU 8 weist in der dargestellten Ausführungsform hierzu eine Empfangseinheit, das heißt einen GPS-Empfänger 9, für den Empfang der Signale zur Positionserkennung, sowie für die Ermittlung von Positionskoordinaten und weiteren Attributen aus diesen Signalen auf. Weiterhin weist die OBU 8 in der dargestellten Ausführungsform eine Vergleichseinheit 10 auf, die mit einer Speichereinheit 11, in der beispielsweise Angaben für Schwellwerte hinterlegt sein können, verbunden ist. Der Ausgang der OBU 8 steht in der dargestellten Ausführungsform mit einem Gebührenerfassungssystem 12, insbesondere einer zentralen Rechnereinheit, in Verbindung. Es ist erfindungsgemäß auch möglich den Empfänger 9 und die OBU 8 separat auszugestalten. In diesem Fall sind die beiden Geräte aber zur Datenübermittlung miteinander verbunden.

Die Angaben, die von der OBU 8 ausgegeben werden und an das Gebührenerfassungssystem 12 übermittelt werden, sind insbesondere Informationen über die Position, insbesondere die Positionskoordinaten, eine Angabe darüber ob es sich um einen gültigen Fix handelt, die Angabe ob es sich um verwendbare Fixes handelt, insbesondere ob ein vorheriger Fix überschrieben werden kann und ob ein neuer Fahrtrichtungswinkel berechnet werden kann und ob der Winkel des Empfängers gültig ist. Diese Angaben können in dem Gebührenerfassungssystem 12 verarbeitet werden und insbesondere als Basis für die Ermittlung anfallender Gebühren verwendet werden.

Einige der Bedingungen, die für ein Ausführungsbeispiel des erfindungsgemäßen Verfahrens verwendet werden, werden im Folgenden genauer beschrieben.

Als Bedingung für einen gültigen GPS-Fix wird zunächst die Qualität des Fixes, das heißt gegebenenfalls herrschende Einflüsse von Satellitenkonstellationen Reflexionen und dergleichen, sowie der Abstand zwischen zwei aufeinander folgenden Fixes berücksichtigt. Zur Beurteilung, ob der erfasste Fix gültig ist wird neben der reinen Positionsangabe der Fixes sowohl die Geschwindigkeit des aktuellen Fixes als auch des letzten Fixes berücksichtigt. Dies weist den Vorteil auf, dass zum einen ein geschwindigkeitsabhängiger Maximalwert für den Abstand zwischen Fixes festgelegt werden kann und gleichzeitig der Fall, einer für einen gewissen Zeitraum, beispielsweise in einem Tunnel, abgeschirmten GPS-Antenne berücksichtigt werden kann.

Ein gültiger Fix gilt nur dann als erkannt, wenn der HDOP-Wert kleiner als ein vorgegebener maximaler HDOP-Wert ist. Durch die Berücksichtigung des HDOP-Wertes wird sichergestellt, dass der Fix eine gewisse Qualität aufweist. Hierdurch können Fixes, die aufgrund einer ungünstigen Satellitenkonstellation oder Reflexionen entstanden sind und eine geringere Genauigkeit aufweisen, unterdrückt werden.

Zusätzlich muss mindestens eine der folgenden Bedingungen erfüllt sein:

Die Entfernung zwischen zwei Fixes muss kleiner oder gleich einer vorgegebenen, maximalen Entfernung sein. Ist dies nicht der Fall, so muss die Geschwindigkeit des letzten Fixes, größer als die vorgegebene minimale Geschwindigkeit sein, um die Gültigkeit des Fixes festzustellen. Dadurch werden Tunneldurchfahrten und temporäre Fixverluste bei Unterführungen berücksichtigt.

Der Grenzwert, den der Abstand von zwei aufeinander folgenden Fixes nicht überschreiten darf, ist von der Geschwindigkeit abhängig. Somit können Ausreißer unterdrückt werden. Zudem wird durch die Geschwindigkeitsabhängigkeit die Empfindlichkeit an das Signal/Rauschverhältnis adaptiert.

Die logische Bedingung für diese Überprüfung lässt sich somit durch die folgende Formel 1 ausdrücken:

$$\{HDOP <= max\_used\text{-}HDOP\} \wedge$$
$$\{ \quad [distance <= max\_used\_distance] \vee$$
$$[ (distance > max\_used\_distance) \wedge (speed * z^{-1} > min\_used\_speed) ] \quad \}$$
$$(1)$$

Wobei:

- max_used_distance = (speed + max_acceleration * 1s) * 1s;
- min_used_speed = (min_used_fix_dist + 1m) /1s
- speed = Geschwindigkeit des Empfängers
- distance = Anstand zwischen zwei zeitlich nacheinander aufgenommenen Fixes
- max_acceleration = vorgegebene Konstante
- min_used_fix_distance = vorgegebene Konstante
- HDOP = vorliegender HDOP-Wert
- Max_used_HDOP = vorgegebene Konstante
- $z^{-1}$ = Zeitverzögerung um einen Abtastschritt
- s = Sekunde

Eine weitere Information, die durch das erfindungsgemäße Verfahren ermittelt und an ein nachgeschaltetes Mautsystem übertragen werden kann, ist, ob die Positionsangaben des Fixes verwendbar sind, insbesondere ob die neuen Positionsdaten die alten Positionsdaten ersetzen sollen. Hierdurch kann eine Software-Stillstandserkennung erzeugt werden. Diese kann einer so genannten Hardware-Stillstandserkennung übergestülpt, das heißt aufgesetzt werden. Während bei der Hardware-Stillstandserkennung lediglich das Kriterium, ob die Geschwindigkeit und der Winkel des Empfängers gleich Null sind als Kriterium verwendet wird, wird bei dem erfindungsgemäßen Verfahren das Ergebnis zuverlässiger.

Auch bei dieser Prüfung wird der HDOP-Wert berücksichtigt und dadurch sichergestellt, dass der Fix eine gewisse Qualität aufweist. Hierdurch können Fixes, die aufgrund einer ungünstigen Satellitenkonstellation oder Reflexionen entstanden sind und eine geringere Genauigkeit aufweisen, unterdrückt werden.

Zudem wird überprüft, ob die neue Position innerhalb eines definierten Ringbereiches um den zuvor erfassten Fix liegt, wobei die Geschwindigkeit des letzten gültigen Fixes größer als die Mindestgeschwindigkeit sein muss. Die neue Position darf nur dann außerhalb des definierten Ringbereiches liegen, wenn die Geschwindigkeit des letzten gültigen Fixes größer als die Mindestgeschwindigkeit ist. Dies trägt der oben beschriebenen Tunnel-Problematik Rechnung.

Weiterhin wird ein Signal zur Überschreibung nur dann erzeugt, wenn eine Strecke unterhalb der Mindestgeschwindigkeit ("Kriechen") bei geringer Winkelabweichung der einzelnen gültigen Fixes untereinander zurückgelegt wurde, die über einem Kriech-Grenzwert von z. B. 50m liegt. Dadurch wird vermieden, dass bei einer Kriechfahrt, bei der immer die Mindestgeschwindigkeit unterschritten wird, die Position festgehalten wird.

Zudem wird die Hardware-Stillstandserkennung berücksichtigt. Ist diese nicht aktiviert, das heißt werden der Winkel des Empfängers (course) und die Geschwindigkeit des Empfängers (speed) als Nicht-Null erkannt, wird bei Erfüllung der anderen Kriterien das Signal, dass die Positionsdaten überschrieben werden können, erzeugt. Da nach einem Tunnel sowohl die Geschwindigkeit als auch der Kurs Null sein können, wird die Überprüfung nach einer eventuellen Tunnelproblematik zusätzlich durchgeführt. Bei einer Tunnelfahrt können somit auch bei vermeintlich aktivierter Hardware-Stillstanderkennung die Positionsdaten überschrieben werden.

Die logische Bedingung für diese Prüfung lässt sich somit durch die folgende Formel 2 ausdrücken:

$$
\begin{aligned}
&\{ \quad \text{HDOP} <= \text{max\_used-HDOP} \quad \} \wedge \\
&\{ \quad [ \quad ((\text{distance} >= \text{min\_used\_fix\_distance}) \wedge \\
&\qquad\qquad (\text{distance} <= \text{max\_used\_fix\_distance})) \wedge \\
&\qquad\qquad (\text{speed} >= \text{min\_used\_fix\_dist} / 1s) ] \vee \\
&\quad [ (\text{distance} > \text{max\_used\_distance}) \wedge (\text{speed} * z^{-1} > \text{min\_used\_speed}) ] \vee \\
&\quad [ \text{creep\_distance} > \text{max\_creep\_dist}] \} \wedge \\
&\{ \quad [ (\text{distance} > \text{max\_used\_distance}) \wedge (\text{speed} * z^{-1} > \text{min\_used\_speed}) ] \vee \\
&\quad [ \,! \,((\text{course} == 0 \wedge (\text{speed} == 0))] \}
\end{aligned}
$$

$$(2)$$

wobei:

- max_used_distance = (speed + max_acceleration * 1s) * 1s;
- min_used_speed = (min_used_fix_dist + 1) / 1s
- max_creep-dist = vorgegebene Konstante
- speed = Geschwindigkeit des Empfängers
- distance = Anstand zwischen zwei zeitlich nacheinander aufgenommenen Fixes
- min_used_fix_distance = vorgegebene Konstante
- HDOP = vorliegender HDOP-Wert
- Max_used_HDOP = vorgegebene Konstante
- $z^{-1}$ = Zeitverzögerung um einen Abtastschritt
- Course = Winkel des Empfängers
- s = Sekunde

Eine weitere Information, die erfindungsgemäß alternativ oder zusätzlich für die Überprüfung der Verwendbarkeit ermittelt wird, ist ob zum einen ein neuer Fahrtrichtungswinkel berechnet werden kann und zum anderen ob der Winkel des GPS-Receivers (course) gültig ist. Es wird dadurch vermieden, dass ein ungültiger Winkel von 0° oder ein unsinniger Winkel bei quasi-Stillstand an ein nachgeschaltetes System gegeben wird. Hierfür wird eine Reihe von Bedingungen überprüft.

Zunächst wird der HDOP-Wert berücksichtigt, wodurch sichergestellt wird, dass der Fix eine gewisse Qualität aufweist. Hierdurch können Fixes, die aufgrund einer ungünstigen Satellitenkonstellation oder Reflexionen entstanden sind und eine geringere Genauigkeit aufweisen, unterdrückt werden.

Die Mindestgeschwindigkeit muss überschritten sein. Dadurch wird vermieden, dass aus stark verrauschten Koordinaten einen Winkel berechnet wird.

Die Hardware-Stillstanderkennung ist nicht aktiviert, das heißt weder der Winkel noch die Geschwindigkeit des Empfängers beträgt Null. Hierdurch wird der Fall des Stillstandes des Fahrzeuges ausgeschlossen, in dem es keine Positionsänderung und somit auch keine Winkeländerung gibt.

Die neue Position muss innerhalb des definierten Ringbereiches liegen, wobei die Geschwindigkeit größer der Mindestgeschwindigkeit sein muss.

Die neue Position darf nur dann außerhalb des definierten Ringbereiches liegen, wenn die Geschwindigkeit des letzten gültigen Fixes größer der Mindestgeschwindigkeit ist (Tunnel-Problematik)

Die logische Bedingung für diese Prüfung lässt sich somit durch die folgende Formel 3 ausdrücken:

$$\{ \quad HDOP <= max\_used\_HDOP \quad \} \wedge$$

$$\{ \quad speed >= min\_used\_fix\_dist / 1s \} \wedge$$

$$\{ \quad [(distance >= min\_used\_fix\_distance) \wedge$$

$$(distance <= max\_used\_distance)] \vee$$

$$[ (distance > max\_used\_distance) \wedge (speed * z^{-1} > min\_used\_speed) ] \} \wedge$$

$$\{ \quad ! [(course == 0) \wedge (speed == 0)] \quad \}$$

$$(3)$$

wobei:

- max_used_distance = (speed + max_acceleration * 1s) * 1s;
- min_used_speed = (min_used_fix_dist + 1 m) / 1s
- speed = Geschwindigkeit des Empfängers
- distance = Abstand zwischen zwei zeitlich nacheinander aufgenommenen Fixes
- max_acceleration = vorgegebene Konstante
- min_used_fix_distance = vorgegebene Konstante
- HDOP = vorliegender HDOP-Wert
- Max_used_HDOP = vorgegebene Konstante
- $z^{-1}$ = Zeitverzögerung um einen Abtastschritt
- Course = Winkel des Empfängers
- s = Sekunde

Zur Überprüfung der Winkelabweichung im Kriechfall, wird der Winkel zwischen der letzen gültigen Position und der aktuellen Position sowie der letzte gültige course (pass_theta _and_course==1) verwendet. Der Kriechabstand (creep-distance) ist hierbei die Summe der Abstände der einzelnen gültigen GPS-Fixes. Die Summe wird jedoch bei den folgenden Bedingungen wieder auf Null gesetzt.
Wenn der Mindestabstand zweier aufeinander folgender gültiger Fixes überschritten wurde oder kein gültiger Fix vorliegt oder die Mindestgeschwindigkeit überschritten wurde, oder die Winkelabweichung zwischen Winkel des Empfängers und dem Fahrtrichtungswinkel einen Grenzwert überschritten hat oder bereits die maximale Kriechentfernung erreicht wurde.
Die logische Bedingung für diese Prüfung lässt sich somit durch die folgende Formel 4 ausdrücken:

$$\{distance >= min\_used\_fix\_dist\} \vee$$

$$\{ ! [valid\_GPS\_fix] \} \vee$$

$$\{speed >= min\_used\text{-}fix\_dist /1s \} \vee$$

$$\{diff\_angle (angle, course (pass\_theta\_and\_course == 1)) > max\_creep\_angle \} \vee$$

$$\{creep\_distance* z^{-1} > max\_creep\_dist \}$$

$$(4)$$

wobei:

- max_creep_angle = vorgegebene Konstante (z.B. 30°)
- max_creep_dist = vorgegebene Konstante
- s = Sekunde

Die aufgezeigten logischen Bedingungen werden nicht zwangsweise nacheinander ausgeführt. Vielmehr sind diese so miteinander verknüpft, dass einzelne Vergleichs-Zwischenergebnisse in mehreren logischen Bedingungen verwendet werden. Die Ergebnisse der Überprüfungen, insbesondere die Informationen über die Gültigkeit eines Fixes und dessen Verwendbarkeit können als Signale an ein nachgeschaltetes Mautsystem als Eingangsgrößen übermittelt werden.

Mit der vorliegenden Erfindung ist es somit möglich die Integrität von GPS-Fixes zu verbessern, indem einer Reihe von Umständen Rechnung getragen werden kann. Insbesondere können die Problematik des Abschirmens einer GPS-Antenne, beispielsweise in einem Tunnel, des Bewegens des Fahrzeuges mit langsamer Geschwindigkeit, das so genannte Kriechen, eines Quasi-Stillstandes, der Geschwindigkeit des Fahrzeuges und Störungen durch Umgebungsbedingungen berücksichtigt werden.

Hierzu wird ein Plausibiltäts-Check durchgeführt, der aus logischen Bedingungen besteht. In diesem Check werden die Positionskoordinaten gefiltert, wobei zusätzliche GPS-Attribute wie speed und course sowie auch Angaben, wie HDOP, verwendet werden. Ungültige Koordinaten werden verworfen, GPS-typisches Rauschen im Stillstand sowie Sprünge durch Wechsel von Satelliten werden entfernt.

Insbesondere kann durch die vorliegende Erfindung ein so genanntes "static charging", das heißt eine wiederholte Bemautung eines Virtual Gantries bei Stillstand und schlechter Satellitenkonstellation oder abgeschatteter GPS-Antenne verhindert werden.

Zudem wird mit der vorliegenden Erfindung die Möglichkeit einer einfachen Datenverarbeitung durch logische Bedingungen gegeben. Eine aufwendige Filterberechnung wie bei Sensorfusion kann entfallen und eine zusätzliche Sensor-Hardware ist nicht notwendig.

**Bezugszeichenliste**

| | |
|---|---|
| 1 | Zulässigkeitsbereich |
| 2 | unmittelbare Nähe zu Fix |
| 3 | minimaler Fixabstand |
| 4 | maximaler Fixabstand |
| 5 | Fahrrichtung |
| 6 | System zur Ermittlung von Positionsdaten |
| 7 | GPS-System (Satelliten) |
| 8 | Steuergerät (z.B. On-board unit) |
| 9 | GPS-Empfänger |
| 10 | Vergleichseinheit |
| 11 | Speichereinheit |
| 12 | Mautsystem |

F     erster Fix

F'     aktueller Fix

VG     Virtual Gantry

**Patentansprüche**

1. Verfahren zur Ermittlung von Positionsdaten eines Objekts, bei dem Signale zur Positionsermittlung von einem Positionsermittlungs-System (7) an einen, dem Objekt zugeordneten, Empfänger (9) übermittelt werden, wo aus den erfassten Signalen Positionsangaben ermittelt werden, wobei die an den Empfänger übermittelten Positionsangaben einer Prüfung unterzogen werden, wobei zumindest ein Attribut des Empfängers als Prüfungskriterium verwendet wird und der Wert des mindestens einen Attributes mit mindestens einem Grenzwert verglichen wird, **dadurch gekennzeichnet, dass** mindestens ein Attribut einen aus mindestens einer zeitlich zuvor erfassten Positionsangabe zu einer aktuellen Positionsangabe abgeleiteten Abstand und/oder Winkel darstellt und dass der Grenzwert für den Abstand und/oder den Winkel in Abhängigkeit der Geschwindigkeit des Empfängers bestimmt wird.

2. Verfahren nach Anspruch 1, **dadurch gekennzeichnet, dass** die Positionsangaben in Abhängigkeit des Überprüfungsergebnisses gefiltert werden.

3. Verfahren nach Anspruch 1 oder 2, **dadurch gekennzeichnet, dass** die Werte von mindestens zwei Attributen mit Grenzwerten verglichen werden.

4. Verfahren nach einem der Ansprüche 1 bis 3, **dadurch gekennzeichnet, dass** die Werte eines Attributes mit mindestens zwei Grenzwerten verglichen werden, wobei ein Grenzwert einen Minimalwert und ein Grenzwert einen Maximalwert darstellt.

5. Verfahren nach einem der Ansprüche 1 bis 4, **dadurch gekennzeichnet, dass** der Grenzwert für mindestens ein Attribut in Abhängigkeit mindestens eines weiteren Attributes bestimmt wird.

6. Verfahren nach einem der Ansprüche 1 bis 5, **dadurch gekennzeichnet, dass** der Wert mindestens eines Attributs aus zeitlich zuvor erfassten Positionsangaben ermittelt wird.

7. Verfahren nach einem der Ansprüche 1 bis 6, **dadurch gekennzeichnet, dass** mindestens ein Attribut die Geschwindigkeit des Empfängers darstellt.

8. Verfahren nach einem der Ansprüche 1 bis 7, **dadurch gekennzeichnet, dass** mindestens ein Attribut eine Richtungsangabe des Empfängers, insbesondere den Sollkurs und/oder die Bewegungsrichtung des Empfängers und/oder den Winkel zwischen den Bewegungsrichtungen des Empfängers in zwei Positionen des Empfängers darstellt.

9. Verfahren nach einem der Ansprüche 1 bis 8, **dadurch gekennzeichnet, dass** zumindest der Wert eines Attributes einer zeitlich zuvor erfassten Positionsangabe mit einem Grenzwert verglichen wird.

10. Verfahren nach einem der Ansprüche 1 bis 9, **dadurch gekennzeichnet, dass** zusätzlich zu dem mindestens einen Attribut des Empfängers mindestens eine Angabe bezüglich der Satellitenübertragung, insbesondere eine Verschlechterung der Genauigkeit, für die Prüfung verwendet wird.

11. Verfahren nach einem der Ansprüche 1 bis 10, **dadurch gekennzeichnet, dass** in der Prüfung überprüft wird, ob die erfasste Positionsangabe eine gültige Positionsangabe darstellt.

12. Verfahren nach einem der Ansprüche 1 bis 11, **dadurch gekennzeichnet, dass** in der Prüfung überprüft wird, ob eine zuvor erfasste Positionsangabe mit einer aktuellen Positionsangabe überschrieben werden kann.

13. Verfahren nach einem der Ansprüche 1 bis 12, **dadurch gekennzeichnet, dass** in der Prüfung zumindest überprüft wird, ob die erfassten Positionsangaben für die Ermittlung weiterer Werte von Attributen verwendet werden können.

14. Verfahren nach einem der Ansprüche 1 bis 13, **dadurch gekennzeichnet, dass** die durch das Verfahren ermittelten Positionsdaten als Eingangskoordinaten für ein Mauterhebungssystem verwendet werden.

15. System zur Ermittlung von Positionsdaten eines Objekts, wobei dieses zumindest einen Empfänger (9) zum Empfang von satellitenbasierten Positionsangaben und eine Erkennungseinheit (10, 11) zum Erkennen des Stillstandes eines Objekts aufweist, wobei die Erkennungseinheit (10, 11) dem Empfänger (9) zugeordnet ist und die Erkennungseinheit (10, 11) eine Vergleichseinheit (11) umfasst, wobei die Vergleichseinheit (11) zur Bestimmung der Zugehörigkeit von Positionsangaben zu einem vorgegebenen Bereich dient, wobei der Bereich einen Zulässigkeitsbereich darstellt, dessen Grenzwerte für den Abstand zwischen Positionsangaben und/oder für einen Winkel zu der Fahrtrichtung in Abhängigkeit der Geschwindigkeit des Empfängers festgelegt werden.

16. System nach Anspruch 15, **dadurch gekennzeichnet, dass** die Erkennungseinheit (10, 11) in einem Steuergerät, insbesondere einer On-Board-Unit (8) eines Gebührenerfassungssystems (12) enthalten ist und insbesondere ein Programm darstellt.

17. System nach einem der Ansprüche 15 bis 16, **dadurch gekennzeichnet, dass** dieses eine Schnittstelle, insbesondere eine Luftschnittstelle, zu einem Gebührenerfassungssystem (12) aufweist.

18. System nach Anspruch 17, **dadurch gekennzeichnet, dass** über die Schnittstelle Positionsangaben, die in dem Empfänger ermittelt wurden, übertragen werden können.

**Claims**

1. Method for determining position data of an object, wherein signals for determining the position are transmitted by a system (7) for determining the position data to a receiver (9) allocated to the object, where position data are identified from the determined signals, wherein the position data transmitted to the receiver undergo a check, wherein at least one attribute of the receiver is used as assessment criterion and the value of the at least one attribute is compared to at least one threshold value, **characterised in that** at least one attribute is at least one of a distance and/or angle of a position data previously assessed to a current position data and that the threshold value for the distance and/or the angle is determined depending on the speed of the receiver.

2. Method according to claim 1, **characterised in that** the position data are filtered depending on the assessed result.

3. Method according to claim 1 or 2, **characterised in that** the values of at least two attributes are compared to threshold values.

4. Method according to any of claims 1 to 3, **characterised in that** the values of one attribute are compared to at least two threshold values, wherein one threshold value is a minimum value and one threshold value is a maximum value.

5. Method according to any of claims 1 to 4, **characterised in that** the threshold value for at least one attribute is determined depending on at least one further attribute.

6. Method according to any of claims 1 to 5, **characterised in that** the value of at least one attribute is determined based on position data that have been detected previously.

7. Method according to any of claims 1 to 6, **characterised in that** at least one attribute is the speed of the receiver.

8. Method according to any of claims 1 to 7, **characterised in that** at least one attribute shows a direction indication of the receiver, particularly the set course and/or the moving direction of the receiver and/or the angle between the moving directions of the receiver in two positions of the receiver.

9. Method according to any of claims 1 to 8, **characterised in that** at least the value of one attribute of a previously determined position data is compared to a threshold value.

10. Method according to any of claims 1 to 9, **characterised in that** in addition to the at least one attribute of the receiver, at least one piece of data in respect of the satellite transmission, in particular a deterioration of exactness, is used for the assessment.

11. Method according to any of claims 1 to 10, **characterised in that** the assessment comprises checking whether or not the taken position data shows a valid positioning indication.

12. Method according to any of claims 1 to 11, **characterised in that** the assessment comprises checking whether or not the previously taken positioning indication can be overwritten with a current positioning indication.

13. Method according to any of claims 1 to 12, **characterised in that** the assessment comprises at least checking whether or not the detected position data can be used for determining further values of attributes.

14. Method according to any of claims 1 to 13, **characterised in that** the position data determined by means of the method can be used as initial coordinates for a street charging system.

15. System for determining position data of an object, wherein this has at least one receiver (9) for receiving satellite-based position data and a detection unit (10, 11) for detecting the halt of an object, wherein the detection unit (10, 11) is allocated to the receiver (9) and the detection unit (10, 11) comprises a comparing unit (11) for determining whether position data pertain to a predetermined area, wherein the area is an accepted area whose threshold values are predetermined for the distance between position data and/or for an angle to the moving direction depending on the speed of the receiver.

16. System according to claim 15, **characterised in that** the detection unit (10, 11) is comprised in a steering device, preferably an On-Board-Unit (8) of a charge metering system (12) and preferably is a program.

**17.** System according to any of claim 15 to 16, **characterised in that** this has an interface, preferably an air interface, for a charge metering system (12).

**18.** System according to claim 17, **characterised in that** the position data that were determined in the receptor, can be transmitted via the interface.

## Revendications

**1.** Procédé destiné à la détermination de données de position d'un objet, avec lequel des signaux servant à déterminer la position sont transmis par un système de détermination de position (7) à un récepteur (9) associé à l'objet, où des indications de position sont déterminées à partir des signaux détectés, les indications de position transmises au récepteur étant soumises à un contrôle, au moins un attribut du récepteur servant de critère de vérification et la valeur du ou des attributs étant comparée à au moins une valeur limite, **caractérisé en ce qu'**au moins un attribut représente une distance et/ou un angle déduit d'au moins une indication de position détectée auparavant dans le temps par rapport à une indication de position actuelle et **en ce que** la valeur limite est déterminée pour la distance et/ou pour l'angle en fonction de la vitesse du récepteur.

**2.** Procédé selon la revendication 1, **caractérisé en ce que** les indications de position sont filtrées en fonction du résultat de la vérification.

**3.** Procédé selon la revendication 1 ou 2, **caractérisé en ce que** les valeurs d'au moins deux attributs sont comparées à des valeurs limites.

**4.** Procédé selon l'une des revendications 1 à 3, **caractérisé en ce que** les valeurs d'un attribut sont comparées à au moins deux valeurs limites, une valeur limite représentant une valeur minimale et une valeur limite représentant une valeur maximale.

**5.** Procédé selon l'une des revendications 1 à 4, **caractérisé en ce que** la valeur limite est déterminée pour au moins un attribut en fonction d'au moins un autre attribut.

**6.** Procédé selon l'une des revendications 1 à 5, **caractérisé en ce que** la valeur d'au moins un attribut est déterminée à partir des indications de position détectées auparavant dans le temps.

**7.** Procédé selon l'une des revendications 1 à 6, **caractérisé en ce qu'**au moins un attribut représente la vitesse du récepteur.

**8.** Procédé selon l'une des revendications 1 à 7, **caractérisé en ce qu'**au moins un attribut représente une indication de direction du récepteur, en particulier le parcours attendu et/ou la direction de déplacement du récepteur et/ou l'angle entre les directions de déplacement du récepteur en deux positions du récepteur.

**9.** Procédé selon l'une des revendications 1 à 8, **caractérisé en ce qu'**au moins la valeur d'un attribut d'une indication de position détectée auparavant dans le temps est comparée à une valeur limite.

**10.** Procédé selon l'une des revendications 1 à 9, **caractérisé en ce que**, en plus du ou des attributs du récepteur, au moins une indication relative à la transmission par satellite, en particulier une dégradation de la précision, est employée pour le contrôle.

**11.** Procédé selon l'une des revendications 1 à 10, **caractérisé en ce qu'**il est vérifié au cours du contrôle si l'indication de position détectée représente une indication de position valide.

**12.** Procédé selon l'une des revendications 1 à 11, **caractérisé en ce qu'**il est vérifié au cours du contrôle si une indication de position détectée auparavant peut être remplacée par une indication de position actuelle.

**13.** Procédé selon l'une des revendications 1 à 12, **caractérisé en ce qu'**il est vérifié au cours du contrôle au moins si les indications de position détectées peuvent être employées pour la détermination d'autres valeurs d'attributs.

**14.** Procédé selon l'une des revendications 1 à 13, **caractérisé en ce que** les données de position déterminées par le

**EP 1 696 207 B1**

procédé servent de coordonnées d'entrée pour un système de péage.

15. Système pour déterminer des données de position d'un objet, ce dernier comportant au moins un récepteur (9) servant à recevoir des indications de position basées sur des satellites et une unité de reconnaissance (10, 11) servant à reconnaître l'arrêt d'un objet, l'unité de reconnaissance (10, 11) étant associée au récepteur (9) et l'unité de reconnaissance (10, 11) comportant une unité de comparaison (11), l'unité de comparaison (11) servant à déterminer l'appartenance d'indications de position à une zone prédéfinie, la zone représentant une zone d'admissibilité dont des valeurs limites pour la distance entre des indications de position et/ou pour un angle par rapport à la direction de marche sont définies en fonction de la vitesse du récepteur.

16. Système selon la revendication 15, **caractérisé en ce que** l'unité de reconnaissance (10, 11) est comprise dans un appareil de commande, en particulier dans une « On-Board-Unit » (unité embarquée) (8) d'un système de détermination de taxes (12) et représente en particulier un programme.

17. Système selon l'une des revendications 15 à 16, **caractérisé en ce que** ce système comporte une interface, en particulier une interface radio, avec un système de détermination de taxes (12).

18. Système selon la revendication 17, **caractérisé en ce que** des indications de position, qui ont été déterminées dans le récepteur, peuvent être transmises par le biais de l'interface.

FIG. 1

FIG. 2

speed <= min_used_speed

FIG. 3

EP 1 696 207 B1

speed > min_used_speed

FIG. 4

EP 1 696 207 B1

18

FIG. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6230097 B1
- DE 4402614 A1
- US 6748322 B1
- US 20030016143 A1
- DE 4344433 A1
- DE 10010607 A1